(19) Europäisches Patentamt / European Patent Office / Office européen des brevets

(11) **EP 2 017 310 B1**

(12) **EUROPEAN PATENT SPECIFICATION**

(45) Date of publication and mention
of the grant of the patent:
**12.02.2014 Bulletin 2014/07**

(51) Int Cl.:
*C09C 1/64* *(2006.01)*        *C09D 11/00* *(2006.01)*
*C09D 11/02* *(2006.01)*

(21) Application number: **07013985.2**

(22) Date of filing: **17.07.2007**

(54) **Ink jet printing ink containing thin aluminium effect pigments and method**

Tintenstrahldrucktinte mit Effektpigmenten aus dünnem Aluminium und entsprechendes Verfahren

Encre d'impression à jet d'encre contenant de minces pigments à effets d'aluminium

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**21.01.2009 Bulletin 2009/04**

(73) Proprietor: **Eckart GmbH
91235 Hartenstein (DE)**

(72) Inventors:
• **Dieter, Prölß
91126 Schwabach (DE)**
• **Stefan, Trummer Dr.
90480 Nürnberg (DE)**
• **Andreas, Kröll
91235 Velden (DE)**

(74) Representative: **Louis Pöhlau Lohrentz
Patentanwälte
Postfach 30 55
90014 Nürnberg (DE)**

(56) References cited:
**EP-A- 0 451 785        EP-A- 1 621 586
WO-A-2004/087816        WO-A2-2004/035684**

**Description**

The present invention is directed to an ink jet printing ink containing aluminium effect pigments and to a method of printing as well as to a method of producing an ink jet printing ink and an article coated with said ink jet printing ink.

In ink jet printing technology, tiny drops of ink jet printing ink are projected directly on the surface of a substrate for printing without physical contact between the printing device and the substrate surface. The placement of each drop on the printing surface is controlled electronically. The ink jet printing technology has become an important technology for printing variable data and images on paper, cardboard, etc. on the one hand and on products such as, for example, cans, bottles, foils, etc. on the other hand. It is also possible to directly print on fragile objects such as eggs using ink jet technology. The ink jet technology allows to print these data and images at a high speed.

Various principles have been developed for drop generation in the past such as electrostatic, magnetic, piezoelectric, electro-thermal, mechanical micro-valve, and spark discharge technologies. Regardless of type of drop generation, the ink jet technology is basically classified into two basic categories, namely continuous ink jet - CIJ - and impulse or drop-on-demand - DOD - ink jet technology.

The continuous ink jet technology is characterised by pressurised ink discharge through a nozzle to generate drops of ink directed to the substrate surface in a continuous stream.

[0005] - The impulse ink jet technology differs from the continuous ink jet technology in that the ink supply is maintained at or near atmospheric pressure. An ink drop is ejected from a nozzle only on demand when a controlled excitation is applied to the drop-generating transducer. The impulse ink jet (or drop-on-demand) technology is primarily used in colour printers.

In recent years colour printers have been developed allowing to produce colour prints with the basic colours yellow, cyan and magenta and occasionally black. These colours are widely used as process colours in established printing processes like lithography, gravure and flexo printing.

In order to further improve the quality of the colour prints, especially in view of the increasing applications for photo printing, so called "spot colours" are used. In offset printing a spot colour is any colour generated by a pure or mixed ink that is printed using a single run. These spot colours can include orange and green in addition to the four basic colours or any other colours which expand the colour gamut and vividness of a printed image.

EP 1 205 521 discloses a pigment preparation for an ink jet process according to which a wide variety of pigments can be used. When producing the pigment preparation all components are comminuted in a mill to obtain a particle size wherein preferably 99 % of the particles have a particle size of below 1 $\mu$m. Pigments having a particle size of below 1 $\mu$m are more or less of spherical nature which are not able to produce a metallic appearance in a print.

JP 11-323223 A discloses an ink jet printing ink containing metallic pigments produced with pvd methods.

Also, WO 2006/101054 A1 describes ink jet printing inks containing pvd-metallic pigments.

EP 0 451 785 A1 is directed to an aluminum pigment having a ratio of specific surface area in $m^2$/g to water coverage in $m^2$/g, of 5.0 or less and flakiness of 90 or more.

WO 2004/087816 A2 is directed to aluminum pigments which are at least partly coated with lubricant. These aluminum pigments have a) a water spreading coefficient ranging between 40,000 and 130,000 $cm^2$/g, b) an average thickness h of less than 100 to 30 nm, said average thickness h being calculated from the water spreading coefficient and by counting the thickness from the $h_{50}$ value of the cumulative passage distribution by means of scanning electron microscopy, c) a relative range of he thickness distribution Ah of 70 to 140 percent, which is determined by counting the thickness by means of scanning electron microscopy and is calculated according to formula Ah = 100 x ($h_{90}$ - $h_{10}$) / $h_{50}$ based on the corresponding cumulative passage graph of the relative frequencies, d) a form factor $d_{50}$/h of more than 200, e) a peak-to-valley value of 0.30 to 0.9, said peak-to-valley value being calculated from the specific surface that is measured according to the BET method and the spreading coefficient in accordance with formula BET value/2 x spreading coefficient.

EP 1 621 586 A1 is directed to an aluminum flake pigment, obtained by grinding aluminum powder in an organic solvent, having an average thickness (t) in the range of 0.025 $\mu$m to 0.08$\mu$m and an average particle diameter ($D_{50}$) in the range of 8 $\mu$m to 30 $\mu$m.

WO 2004/035684 A2 is directed to an aqueous ink composition for the ink-jet printing method, which comprises a) metallic or non-metallic, inorganic platelet-shaped particles having an average particle diameter of at least 2 $\mu$m, b) a dispersant (dispersing agent) and c) a binder.

Disadvantageously, it is not satisfactorily possible to produce ink jet prints, especially photo prints, having a metallic effect or metallic appearance with high quality such as high gloss, high lop and high hiding power at reasonable costs. The pvd-metallic pigments are very expensive and not easy to handle due to its strong tendency to agglomeration.

It is an objective of the present invention to provide an ink jet printing ink as well as an ink jet printing ink allowing to produce prints having a metallic appearance and being in an acceptable range of costs.

The objective is solved by providing an ink jet printing ink comprising aluminium effect pigments having the following properties:

a) a $d_{50}$-value of the volume averaged particle size distribution curve in a range of about 1 μm to 5 μm

b) an average thickness $h_{50}$ of 15 to 150 nm determined by counting their SEM images

c) an x-ray diffractogram measured on said aluminium effect pigments in essentially plane-parallel alignment showing main peaks which are not [111]- or [222]-reflections.

Preferred embodiments of the ink jet printing ink of the present invention are specified in sub-claims 2 to 23.

Furthermore, the object of the invention is solved by a method of printing comprising applying an ink jet printing ink of any of claims 1 to 23 on a surface of a substrate using preferably an ink jet printer.

A preferred embodiment is specified in sub-claim 25.

The object of the invention is also solved by a method of producing an ink jet printing ink according to any one of claims 1 to 23, comprising gently mixing aluminium effect pigments with components of ink jet printing inks such as solvents, diluents and/or binding agents. Gently mixing of the aluminium effect pigments means that the during the mixing process said aluminium effect pigments are not damaged, what would impair the superior optical properties, such as the reflectance.

Finally, the object of the invention is solved by an article coated with an ink jet printing ink of any one claims 1 to 23. Such an article can be, for example, paper, cardboard, foils made from plastic or metallic material, labels, bottles and containers made from glass, ceramic material, plastic material or metallic material, textiles, etc..

With the present invention it has surprisingly been discovered that it is possible to produce ink jet prints having a high class metallic appearance incorporating aluminium effect pigments into ink jet printing inks which have not been produced with expensive and cumbersome pvd-methods. Furthermore, the aluminium effect pigments used in the present invention have a surprisingly reduced tendency to agglomerate when using in an ink jet printing ink. Thus, the aluminium effect pigments used in the present invention can be more easily incorporated into ink jet printing inks compared to pvd aluminium pigments, i.e. aluminium pigments obtained by physical vapour deposition.

The quality of the prints is very similar to those which are obtained when using aluminium pigments produced by pvd-methods. The aluminium effect pigments used in the present invention are produced by a wet grinding method. A process for obtaining ground aluminium effect pigments is described, for example, in the EP 1 613 702 A1 which is incorporated by reference therein. Briefly, the aluminium effect pigments are produced by grinding, preferably nearly spherical, aluminium particles in a ball mill or pearl mill.

The aluminium effect pigments used in the present invention differ over those described in EP 1 613 702 A1 in terms of the specific combination of particle characteristics of the $d_{50}$-value of the volume averaged particle size distribution curve of 1 μm to 15 μm and an averaged thickness $h_{50}$ of 15 to 150 nm determined by counting from SEM images.

It turned out that aluminium effect pigments with the aforementioned combination of properties makes them suitable for use in an ink jet printing ink.

Aluminium effect pigments have a platelet-like form hence they act like micro-mirrors directly reflecting incident light. If the metal pigments are reduced to a size of less than 1 μm ($d_{50}$), they are too small to act as a plate-like mirror. However, if the metal pigment flake size is 1 μm or more ($d_{50}$-value), surprisingly these tiny metal flakes still act as aluminium effect pigments, i.e. are capable to reflect light in a uniform and directed manner.

If the average size is above 15 μm the pigments do not pass any more through the configuration such as tubes, channels, filters, nozzle, etc. of the ink jet configuration. Some part of the whole configuration would be clogged and the ink jet head would be practically inoperable.

The $d_{50}$-value refers to the volume-averaged particle size distribution as measured with laser scattering methods. Such particle sizes are determined with instruments such as Cilas 1064.

To give the observer the most appealing view of an image containing aluminium effect pigments it is necessary that the aluminium effect pigments or flakes are not arranged randomly but essentially parallel to the surface of the substrate. In this case the incident light is reflected in a rather uniform way. If the aluminium effect pigments are randomly oriented in the ink jet printing ink the incident light is also randomly reflected which reduces the metallic brilliance and is not attractive to the observer.

After having applied the droplets of ink jet printing ink on a surface of a substrate the ink jet printing ink is dried or cured, for example, by applying heat and/or UV irradiation. This process occurs immediately after ink deposition on the substrate. The period of time for drying or curing is usually in the range of split seconds to minutes, depending on the drying or curing mechanism. During this very short period of time the aluminium effect pigments surprisingly orient essentially parallel to the surface of the printed ink.

Without wishing to be bound by theory it is currently believed that the small size of the aluminium effect pigments facilitates a rather quick orientation of the aluminium effect pigments in the ink droplets immediately after application.

According to the invention, the aluminium effect pigments have a $d_{50}$-value (Cilas) in a range of about 1 μm to 5 μm, preferably of about 1.5 μm to 5 μm, most preferably of about 2 μm to 5 μm.

It turned out that a particle diameter or particle size in a range of 2 to 5 μm ($d_{50}$-value Cilas) is very superior in terms of the metallic effect obtained after printing the ink jet printing ink.

Preferably, at least 99 % of the particle size distribution curve ($d_{99}$) is in a range of lower than about 14 $\mu$m. More preferably at least 99 % of the particle size distribution curve is a range of lower than about 12 $\mu$m.

Moreover, it is preferred that the particle size distribution (PSD) of the aluminium effect pigments is very narrow. Preferably 100 % of the aluminium effect particles ($d_{100}$) have a particle size of less than 15$\mu$m, further preferred less than 12 $\mu$m.

According to another preferred embodiment of the invention, 100 % of the particle size distribution curve is in a range of between 0.5 to 8 $\mu$m, further preferred between 1 and 7 $\mu$m.

In order to use the established ink jet printing ink technology, it is mostly desirable to use aluminium effect pigments having a diameter at maximum up to 12 $\mu$m as, for example, the jet nozzle openings or other parts of the ink jet configuration are usually in a range of about 20 to 50 $\mu$m.

Basically, the limitations of the upper size of the aluminium effect pigments are determined by the dimensions of the whole printing configuration such as tubes, channels, filters and jet openings. The printing configuration must be such that it can work as a pump on the ink jet printing ink. If an ink jet print head is for example using a larger jet opening it is also possible to use larger aluminium effect pigments.

It has been shown that the ratio of average size, preferably absolute size, ($d_{50}$-value Cilas) of the aluminium effect pigments to the diameter of the jet opening is advantageously in a range of 0.02 to 0.5 and preferably from 0.03 to 0.2 and most preferably from 0.04 to 0.12

Platelet-like metal pigments with these average sizes do easily fit through the jet nozzles of the jet print heads usually used.

The average thickness $h_{50}$ of the aluminium effect pigments as determined by counting their SEM images is preferably 15 to 150 nm.

It turned out that, after applying the ink jet printing ink of the present invention on a substrate, very appealing aluminium effects of the printed ink jet printing ink can be only achieved with metal pigments with these very thin average thicknesses.

These aluminium effect pigments have a average thickness $h_{50}$ of 15 to 150 nm determined by counting their SEM images as described above. More preferably the average thickness $h_{50}$ is 15 to 100 nm and even more preferably 20 to 80 nm.

Also a very preferable average thickness $h_{50}$ is 30 to below 80 nm. With such thin aluminium effect pigments very brilliant effects can be achieved. Besides high gloss and high flop the printings have a look of a liquid metal effect which is usually typical for pvd-pigments.

Less brilliant, but still reasonable metallic effects can be achieved with an average thickness $h_{50}$ of 80 to 130 nm.

Below a $h_{50}$ of 15 nm the pigments are too transparent and appear already quite dark due to their reduced reflective properties. Above a $h_{50}$ of 150 nm the optical performance of the aluminium effect pigments decreases and pigment material is wasted because of the reduced hiding power, i.e. the specific coverage which is calculated as the coverage of aluminium effect pigments per weight.

Usually the particle thickness is determined by measuring the water coverage (according to DIN 55923) and/or by Scanning Electron Microscopy (SEM).

The measurement of water coverage only yields an average thickness, but not the distribution of the particle thickness.

For PVD aluminium pigments with their known strong tendency to agglomerate this method cannot be used at all. For this reason the average thickness of the aluminium effect pigments used in the present invention was determined by SEM. Usually at least 100 particles are analysed in order to have a representative statistics.

The aluminium effect pigments used in the present invention incorporated into the ink jet printing ink of the present invention differ significantly to pvd-pigments regarding their x-ray diffraction patterns. In order to characterise platelet like aluminium effect pigments by XRD method (X-ray Reflection Diffraction) the pigments are oriented in an essentially plane parallel orientation prior to measurement.

The x-ray diffractogram (XRD) measured on the aluminium effect pigments used in the present invention in essentially plane-parallel alignment shows, usually one or two, main peaks which are not [111]- or [222]-reflections.

The measurement can be made on most X-ray diffractometers available on the market.

In the present invention the term "essentially plane-parallel alignment" means that at least 80 % of the pigments are oriented in parallel to the substrate surface within a tolerance of +/- 15° to the substrate surface.

The denomination "[111] plane" refers to Miller's indices. The [111] plane is the most densely packed diagonal plane of a face-centered cubic lattice.

The [111] reflection of the aluminium effect pigments used in the present invention is weak, if visible at all. The [222] reflection is even more weaker and might not be detectable.

The main peaks of the aluminium effect pigments used in the present invention are those of the [200] and/or [220] planes. It is especially preferred that the main peak is the one of the [200] plane.

The ratio of the peak intensities of the aluminium effect pigments used in the present invention [111]/[200] is always < 1. Preferably it is < 0.5 and most preferably < 0.1. This result is contrasted by pvd-pigments: these pigments always exhibit main peaks corresponding to the reflexes of the [111]- or the [222]- planes.

These results reflect the well known fact that aluminium which is sputtered onto a foil forms essentially single crystals having the aforementioned reflectivity.

It is assumed that these results reflect the properties of the plastic state of deformation of the aluminium effect pigments during the grinding process.

The usually polycrystalline aluminium powder, which is usually obtained by atomisation of molten aluminium, is subjected to strong shearing forces during the deforming grinding process, using usually balls or spheres as grinding body. The crystallites are sheared against each other whereas the most densely packed [111]-plane represents the plane of shearing. Because the grinding process naturally occurs perpendicular to the surface of the surface of the platelets the [111] planes are broken out of the plane surface. Consequently the peak intensity of the [111] and the second order [222]-planes are decreasing during the ongoing grinding process. At the same time the peaks corresponding to the [200] and the [220]-planes are intensified which finally become main peaks.

The relative width of the thickness distribution $\Delta h$ resulting from counting the Scanning Electron Microscope images of the aluminium effect pigments and calculated from the respective number weighted cumulative distribution according to the formula

$$\Delta h = 100 \, (h_{90}-h_{10}) \, / \, h_{50} \qquad\qquad (I)$$

(" thickness span") is preferably 30 to 140 %,

wherein $h_{90}$ is the number pigments covering 90 % of the absolute height and $h_{10}$ is the number pigments covering 10 % of the absolute height and $h_{50}$ is the number pigments covering 50 % of the absolute height of said aluminium effect pigments.

Such pigments are principally disclosed in the WO 2004/087816 A2 which is incorporated by reference therein. However, the aluminium effect pigments used in the present invention differ over the ones known from WO 2004/087812 A2 with respect to the specific combination of particle characteristics of the $d_{50}$-value of the volume averaged particle size distribution curve of 1 $\mu$m to 15 $\mu$m and an averaged thickness $h_{50}$ of 15 to 150 nm determined by counting from SEM images.

In a more preferable embodiment the number weighted cumulative distribution $\Delta h$ ranges from 30 to 100 % and most preferably from 30 to 70 %.

Very much preferred are aluminium effect pigments with an average thickness $h_{50}$ of 15 to 80 nm and a $\Delta h$ of 30 to less than 70 %.

Such thin particle thickness distribution curves of the aluminium effect pigments used in the present invention surprisingly turned out to give optical effects after application of the ink jet printing ink of the present invention on a substrate with a very high gloss and flop-effect and liquid-metal-effect very similar to pvd-aluminium pigments.

A low $\Delta h$ is necessary to obtain the desired high class optical effects. Pigments with a $\Delta h$ above 140 % do not stack properly in the ink jet printing ink. Furthermore, because of the very short time of orientation, a good orientation can only be achieved for pigments with a $\Delta h$ of less than 140 % and preferably less than 100 %.

The ink jet printing ink of the present invention contains very thin aluminium effect pigments with rather narrow spans of the particle size and the particle thickness distribution curves as recited in claims to enable a uniform and short time of orientation of essentially all aluminium effect pigments during and after application of the ink jet printing ink of the present invention.

The aluminium effect pigments used in the present invention exhibit very high hiding power compared to conventional aluminium effect pigments obtained by grinding methods.

The aluminium effect pigments used in the present invention exhibit preferably a thickness distribution curve with a $h_{90}$ - value of under 110 nm and more preferably under 75 nm. The $h_{95}$ - value of the thickness distribution is preferably below 150 nm and more preferably below 120 nm. Additionally, the $h_{99}$ - value is preferably below 140 nm and more preferably below 90 nm.

Such a narrow thickness distribution of the aluminium effect pigments used in the present invention leads to a very good stacking in the prints of the printed ink jet printing ink.

Therefore, these pigments of the present invention exhibit very good gloss and flop effects.

The aspect ratio f of the aluminium effect pigments used in the present invention is preferably in a range of about 30 to 500, more preferably the aspect ratio is in a range of about 35 to 300 and most preferably in a range of 40 to 200. The aspect ratio is the ratio of average particle size divided by average particle thickness and is represented by the following formula (II):

$$f = 1000 * \frac{d_{50}(\mu m)}{h_{50(nm)}} \qquad \text{(II)}$$

These aspect ratios have been proven useful in order to minimize the time for orientation of the aluminium effect pigments after application of the ink jet printing ink to the surface of substrate.

The aluminium effect pigments used in the present invention used for the ink jet printing ink of the present invention can be of the leafing or the non-leafing type. According to a preferred embodiment of the invention the aluminium effect pigments are leafing pigments. Leafing pigments arrange themselves in an oriented manner, i.e. essentially parallel to the surface of substrate, at the surface of the ink jet printing ink after printed on a substrate whereas non-leafing pigments arrange themselves within the ink jet printing ink uniformly between substrate to which they are applied and the dried printing ink.

Preferably, leafing aluminium effect pigments are used in the present invention, so that the printed images obtained have a very brilliant and shiny appearance for the observer. The leafing behaviour can be induced by coating the aluminium effect pigments, for example, with stearic acid.

Ink jet printing inks containing aluminium pigments made by pvd-process have certain problems due to agglomeration and to settling of the aluminium particles in the ink jet printing ink. Such problems have been tried to overcome by using quite large amounts of dispersion additives and/or anti-settling agents.

Surprisingly, these problems are significantly less severe in the ink jet printing ink of the present invention.

While not whishing to be bound by theory it is assumed that these advantages are due to a certain roughness of the surface of the aluminium effect pigments used in the present invention. The aluminium effect pigments used in the present invention exhibit - due to their manufacturing process - a higher degree of roughness and of corrugation than pvd-pigments which have essentially a perfectly flat surface without corrugations. However, the higher degree of roughness of the aluminium effect pigments used in the present invention prevents a completely plane-parallel attachment of the aluminium effect pigments to each other followed by a strong agglomeration of the pigments. Contrasting to pvd-pigments the aluminium effect pigments used in the present invention can exhibit - on a very small scale - only punctual contacts between the platelets. Therefore, the enforcement of very short ranging attractive forces like van-der-Waals forces or of hydrogen-bonds are minimized and consequently agglomeration or aggregation processes are significantly reduced and preferably avoided at all.

In order to produce such novel aluminium effect pigments, aluminium is molten and subsequently atomized using well established technology. The spherical particles obtained by atomization are subsequently milled in a pearl mill or ball mill to the desired particle size of aluminium effect pigments. The process of ball milling or pearl milling metal particles is an established process known in the art as "Hall process".

To obtain very thin pigments spherical balls made from a material with weight of 2 to 13 mg per sphere have to be used. Preferred balls are glass spheres.
Furthermore fine an aluminium grit is preferably used as starting material for the production of aluminium effect pigments used in the present invention being plate-like in shape.

The average particle size of the aluminium grit $d_{50}$ used for the production of these thin aluminium effect pigments is < 20 $\mu$m, more preferred < 15 $\mu$m, still more preferred < 10 $\mu$m and even more preferred < 8 $\mu$m. In still another preferred embodiment of the invention the average particle size distribution is characterised as follows: $d_{10}$ < 3 $\mu$m, $d_{50}$ < 5 $\mu$m, $d_{90}$ < 8 $\mu$m.

To obtain very thin aluminium effect pigments with a very tiny thickness distribution, e.g. an aluminium effect pigments having an average thickness $h_{50}$ of 15 to 80 nm and a $\Delta h$ of 30 to less than 70 %, a very fine aluminium grit with a narrow size distribution is preferably used. Preferably, an aluminium grit with a particle size characteristics of $d_{grit,10}$ < 3,0 $\mu$m, $d_{grit,50}$ < 5,0 $\mu$m and $d_{grit,90}$ < 8,0 $\mu$m is used. More preferably, an aluminium grit with a particle size characteristics of $d_{grit,10}$ < 0,6 $\mu$m, $d_{grit,50}$ < 2,0 $\mu$m and $d_{grit,90}$ < 4,0 $\mu$m is used.

Pursuant to another preferred embodiment of the invention the aluminium effect pigments are coated with a layer of corrosion inhibiting material.

The corrosion inhibiting material can be made of an encasing layer of metal oxide and/or organic polymeric material.

Preferably, the metal oxide layer comprises silica, alumina, titanium oxide, iron oxide and mixtures thereof. Most preferably, silica is used as a corrosion inhibiting layer. The average thickness of this metal oxide layer, preferably silicon oxide layer, is preferably between 10 and 40 nm, further preferred between 15 nm and 30 nm..

A layer of metal oxide may be applied to the surface of the metal pigments by hydrolysing soluble metal salts in the presence of agitated aluminium effect pigments. For example, metal chloride salts can be hydrolysed in water.

Preferably a sol-gel process for coating aluminium effect pigments with a layer of metal oxide is used. For example, an encapsulating layer of $SiO_2$ may be applied by hydrolysing tetraalkoxysilanes, such as, for example, tetraethoxysilane or tetramethoxysilane in alcoholic media in the presence of agitated aluminium effect pigments, sufficient amounts of water and optionally catalysts such as acids or bases.

The amount of aluminium effect pigment in the ink jet printing ink of the present invention is preferably in a range from about 1 to 30 % by weight, more preferably, from about 2 to 20 % by weight, based on the total weight of said ink jet printing ink.

According to another preferred embodiment of the invention the content of the aluminium effect pigment is in a range from about 2.5 to 8 % by weight, based on the total weight of said ink jet printing ink.

According to another embodiment of the present invention the ink jet printing ink comprises a binding agent. Preferably, these ink jet printing inks are solvent based systems. The amount of binding agent is in a range of 1 to 99 % by weight, based on the total weight of said ink jet printing ink.

Depending on the nature of the substrate to which the ink jet printing ink is to be applied, a binding agent is or is not to be included in the ink jet printing ink. If the binding agent is part of the substrate, e.g. a special ink jet printing paper containing adhesive substances it is not necessary that the ink jet printing ink contains a binding agent.

According to another preferred embodiment of the present invention the ink jet printing ink is based on solvent(s) or water and comprises a binding agent in a range of about 1 to 50 % by weight, based on the total weight of said ink jet printing ink. Furthermore, it is preferred that the content of the binding agent amounts to about 2 to 35 % by weight, based on the total weight of said ink jet printing ink. More preferably the content of the binding agent is in a range of about 3 to 25 % by weight.

According to another preferred embodiment for radiation curing ink jet printing inks, especially for UV ink jet printing inks, the diluent is a reactive diluent, acting also as a binding agent. The amount of the reactive diluent, e.g. liquid oligomers and monomers, is in a range of 1 to 99 % by weight, preferably 10 to 95 % and more preferably 40 to 90 % by weight, based on the total weight of said ink jet printing ink.

That is to say, according to an embodiment of the invention the reactive diluent can be a binding agent.

The binding agent can be any binding agent usually used in ink jet printing inks. Preferred, but not limited thereto, are the following binding agents: UV curable acrylic monomers and oligomers as well as resins of various families, like hydrocarbon resins, modified rosin resins, polyethylene glycol resins, polyamide resins, polyvinylbutyral resins, polyvinyl pyrrolidone resins, polyester resins, polyurethane resins, polyacrylic resins, polyacrylamide resins, polyvinylchloride resins, ketone resins, polyvinyl alcohol resins, modified cellulose or modified nylon resin or other resins soluble in organic solvents or mixtures thereof.

It is preferred that solvent or water based ink jet printing inks comprise a solvent content in an amount of about 10 to 95 % by weight, based on the total weight of said ink jet printing ink. According to another preferred embodiment of the invention the content of solvent amounts to about 20 to 94 % by weight and more preferably 50 to 93 % by weight.

Any solvent or solvent mixture suitable with the ink jet printing ink technology can be used. Preferred solvents are water, alcohols, esters, ethers, thioethers, glycol ethers, glycol ether acetates, amines, amides, ketones and/ or hydrocarbons or mixtures thereof.

Examples for alcohols are alkyl alcohols such as, e.g., methyl alcohol, ethyl alcohol, propyl alcohol, iso-propyl alcohol, butyl alcohol, pentyl alcohol, hexyl alcohol, fluorinated alcohols or mixtures thereof.

Examples of ketone solvents are acetone, methyl ethyl ketone or cyclohexanone, diisobutyl ketone, methyl propyl ketone, diacetone alcohol, N-methylpyrrolidone or mixtures thereof.

Examples of esters are methyl acetate, ethyl acetate, 1-methoxy-2-propylacetate propyl acetate, butyl acetate, methyl propionate or ethyl propionate glycolether acetates, butyl glycol acetate or mixtures thereof.

Examples of ether solvents are diethyl ether, dipropyl ether, tetrahydrofuran, dioxane ethylene glycol ethers, in particularly ethylene glycol ethyl ether or ethylene glycol methyl ether which are also marketed under the trademark Cellosolve®, methoxy propanol or mixtures thereof.

In addition, preferred examples of the organic solvents include a mixture of the diethylene glycol compound that is liquid under normal temperature and normal pressure and the dipropylene glycol or 1-methoxy-2-butylglycol compound that are liquid under normal temperature and normal pressure.

Examples of amine solvents are triethanolamine and dimethylethanolamine. Examples of amide solvents are N-methylpyrrolidone and 2-pyrrolidone.

The hydrocarbon can be selected from the group consisting of terpene hydrocarbons like pinene, limonene, terpinolene; aliphatic hydrocarbons like heptane, mineral spirits, Stoddard solvent and aromatic hydrocarbons like toluene, xylene, solvent naphta and mixtures thereof.

In another embodiment the ink jet printing ink of the present invention is a radiation curable ink, especially an UV curable ink, comprising said solvent in an amount of about 0 to 50 % by weight, based on the total weight of said ink jet printing ink. More preferable the solvent content is 0 to 10 % by weight, because in UV curable inks solvent usually are not necessary. According to a particularly preferred embodiment of the invention the UV curable ink jet printing ink does not contain a solvent.

According to another embodiment of the invention, the ink jet printing ink has a viscosity in a range of about 1 to 100 cps measured with the Brookfield viscometer LV Model DV-II+ using spindle no. 61 at 100 rpm at a temperature of 21°C. Preferably, the viscosity of the ink jet printing ink is in a range of about 3 cps to 30 cps, more preferred in a range of 5 to 20 cps.

The viscosity can be adjusted to accommodate the type of print head used, the substrate to be printed on, and/or the composition of the ink jet printing ink.

According to another embodiment of the invention, the ink jet printing ink has a surface tension from 20 to 50 mN/m. When the surface tension is less than 20 mN/m, the ink jet printing ink composition wetly spreads over the surface of the printer head for ink jet recording or exudes therefrom, resulting in difficulty of ejecting ink droplets in some cases. When the surface tension exceeds 50 mN/m, the ink composition does not wetly spread over a surface of the recording medium, resulting in failure to perform good printing in some cases.

Preferably, the ink jet printing ink comprises additives, for example dispersing agents, anti-settling agents, lubricants, humectants, surfactants, penetrants or mixtures thereof.

The dispersing agents aid to homogeneously disperse all components in the ink jet printing ink, more specifically the aluminium effect pigments, to avoid any tendency of agglomeration, if any. A dispersing agent may improve a homogenous dispersion of all components of the ink jet printing ink that can be dependent on the nature of the components used. Preferably, the dispersing agent is selected from the group consisting of fatty acids or mixtures thereof.

When an organic solvent is used, the ink jet printing ink composition of the invention can contain a dispersant. As the dispersant, there can be used any dispersant used in an ordinary ink composition such as a gravure ink, offset ink, intaglio ink or screen printing ink. In particular, it is preferred to use a dispersant effectively acting when the solubility parameter of the organic solvent is from 8 to 11. As such a dispersant, it is also possible to utilize a commercial product, and specific examples thereof include Solsperse 20000, 24000, 3000, 32000, 32500, 33500, 34000 and 35200 (Avecia K.K.) or Disperbyk-106, 111, 102, 161, 162, 163, 164, 166, 180, 190, 191 and 192 (BYK-Chemie GmbH).

In further preferred embodiments the ink jet printing ink compositions of the present invention contain antisettling agents. These substances are desired to prevent settling of the flaky aluminium effect pigments in the ink. Examples are Byk®-405 in combination with pyrogenic silica, modified ureas such as Byk®-410 and Byk®-411 or waxes like Byk Ceramat®237, Ceramat®250, Cerafak®103, Cerafak®106, or Ceratix®8461.

In aqueous ink formulations Byk®-420 is especially preferred.

The lubricants aid to improve the through-passing properties of the ink jet printing ink through the print head architecture. Preferably, the lubricant is selected from the group consisting of fatty acids such as stearic acid or oleic acid, fatty acid esters and mixtures thereof.

The humectants are used in water-based ink jet printing inks to avoid any drying out especially while in the print head. The humectants reduce the rate of evaporation and prevent precipitation of dyes, when evaporation occurs at the jet orifice. Preferably, the humectants are selected from the group consisting of polyols, such as glycols, glycerine, sorbitol, polyvinyl alcohols and mixtures thereof.

Biocides can be incorporated into ink jet printing inks in order to prevent growth of microorganisms. For example, polyhexamethylene biguanide, isothiazolones, isothiazolinones such as, e.g., 5-chloro-2-methyl-4-isothiazolin-3-one (CIT), 2-methyl-4-isothiazolin-3-one (MIT), etc. or mixtures thereof can be used.

In addition to aluminium effect pigments various colorants can be incorporated into the ink jet printing ink. For example, various black colorants such as C.I. Solvent Blacks 27, 28, 29, 35, 45; various blue colorants such as C.I. Direct Blues 86, 199; C.I. Solvent Blues 25, 44, 48, 67, 70; various red colorants such as C.I. Acid Red 52; C.I. Solvent Reds 49, 172; C.I. Disperse Red 60; C.I. Pigment Red 122; C.I. and/or various yellow colorants such as Acid Yellow 23; C.I. Direct Yellow 86; C.I. Disperse Yellow 119; C.I. Solvent Yellow 162; Solvent Yellow 146; C.I. Pigment Yellow 17 can be used in combination with the ink jet printing ink of the present invention.

The objective underlying the present invention is further solved by providing a method of printing, applying an ink jet printing ink of any one of claims 1 to 23 onto a surface of a substrate preferably using an ink jet printer.

Preferably the substrate is selected from the group consisting of coated or uncoated paper, coated or uncoated cardboard, plastics, metals, ceramics, glass, textiles and combinations thereof. Most preferred substrates are plastics.

The ink jet printing ink of the present invention can be applied to the substrate using a commercially available ink jet printer. Preferably, the ink jet printer has a container reserved for aluminium effect pigments containing ink jet printing ink. Before printing, the aluminium effect pigment containing ink jet printing ink is preferably sieved through a sieve with a mesh size suitable to remove possible remaining aggregated particles, which could clog the nozzle or other parts of the printing setup.

The objective of the present invention is further solved by a method of producing an ink jet printing ink according to any one of claims 1 to 23, comprising gently mixing the aluminium effect pigments used in the present invention with components of ink jet printing inks, e.g. binding agent(s), solvent(s), additive(s), etc., as specified above in detail.

The ink jet printing ink composition of the invention can be prepared by the following method, for example: initially, the aluminium effect pigment used in the present invention, optionally a dispersant, and liquid solvent and/or liquid binding agent and/or diluent are gently mixed, without damaging the aluminium effect pigments. Then, an ink jet printing ink is prepared by a ball mill, a pearl mill, a bead mill, an ultrasonic wave, a jet mill or the like to perform adjustment so as to have desired ink jet printing ink characteristics. Subsequently and optionally, liquid solvent and/or additives, for example, a dispersing aid, a viscosity adjusting agent and/or a binder resin are added or additionally added under stirring, thereby obtaining the ink jet printing ink of the present invention.

An important aspect of the claimed method is that, as mentioned before,the aluminium effect pigments are not damaged during the mixing process. The platelet structure of the aluminium effect pigments is to be preserved in order to maintain the special properties. A bending or twisting of aluminium effect pigments leads to a dramatic loss of the particular specular properties.

For example, the components of the ink jet printing ink of the present invention can be gently mixed using an ultrasonic bath followed by magnetic stirring.

The ink jet printing ink of the present invention can be used with any ink jet printing ink technology. The ink jet printing ink composition of the invention can be applied to various ink jet recording systems. That is to say, it can be applied to various ink jet recording systems such as an electric field controlling system in which ink jet printing ink is ejected utilising electrostatic attraction, a drop-on-demand system (or a pressure pulse system) in which ink is ejected utilising driving pressure of a piezoelectric element, and further, a bubble or thermal system in which ink is ejected utilising pressure developed by forming bubbles and allowing them to grow by high heat.

Preferably, the ink jet printing ink of the present invention is used with the continuous ink jet - CIJ - or impulse or drop-on-demand - DOD - ink jet technology

The invention is further illustrated by the following non-limiting examples. It is to be understood that only preferred embodiments are shown and described. It will be manifest to those skilled in the art that certain changes, various modifications and rearrangements of the parts may be made without departing from the spirit and the scope of the underlying inventive concept and that the same is not limited to the particular forms herein shown and described except insofar as indicated in the scope of the appended claims.

## Pigment A

### a) Atomizing of aluminium and segregation of aluminium grit:

Barrels of aluminium were continuously fed and molten into an industrial oven (Company Induga; capacity: 2.5 tons). In a pre-cooker the molten aluminium was held at a temperature of 720 °C. Several injectors working after the injector principle were dipping into the melt. The aluminium melt was atomised vertically upstairs. The atomising gas was compressed to about 20 bar and heated up to about 700 °C. The aluminium grid cooled down and solidified during the flight through inert gas (nitrogen). The aluminium grit was collected in a cyclone yielding a grit characterised by a $d_{50}$ of 14 -17 $\mu$m. During further segregation the grit was fed into a multi-cyclone yielding a grit with a $d_{50}$-value of 2.3 - 2.8 $\mu$m. Finally a very fine grit was collected in a filter. This grit had a $d_{10}$-value of 0.4 $\mu$m, a $d_{50}$-value of 1.0 -1.9 $\mu$m and a $d_{90}$-value of 2.0 -3.8 $\mu$m.

### b) Grinding

A barrel mill (length: 32 cm, width: 19 cm) was fed with 4 kg glass spheres (diameter: 2 mm), 75 g of the fine aluminium grid from a), 200 g white spirit and 3,75 g oleic acid. Subsequently, the mixture was milled for 15 h at a rotation rate of 58 rpm yielding very thin aluminium flakes. The product was separated by rinsing with mineral spirit and subsequently screened during a wet sieving process using a sieve with 25 $\mu$m mesh. The fines were essentially freed from the mineral spirit using a suction filter and finally the pigments were made into a paste with isopropanol in a laboratory mixer to a solid content of about 50 % by weight.

This pigment paste is called **Pigment A** in the following.

### c) Crushing:

Pigment A was diluted with isopropanol to a 10% dispersion followed by crushing in a pearl mill (DRAIS PML H/V SuperTex) using stainless steel spheres (diameter: 0.7 - 0.9 mm). The milling duration was 4 h.

Specification:

After crushing the pigment dispersion had a particle size distribution (psd*) with the following characteristics: $D_{10}$ = 1.1 $\mu$m; $D_{50}$ = 3.2 $\mu$m; $D_{90}$ = 6.3 $\mu$m, $D_{99}$ = 9.5 $\mu$m and $D_{100}$ = 12.0 $\mu$m.

* measured with laser granulometer Cilas 1064 (Cilas, France).

After crushing the pigment dispersion was subjected to a solvent exchange process with PM (methoxypropanol) yielding a 50 % by weight paste in a mixture of isopropanol and methoxypropanol.

This pigment paste is called **Pigment B** in the following.

**Pigment C:**

Starting Pigment: Commercially available PVD Aluminum dispersion: "Metalure W (Dispersion in isopropanol with solid content of 20 % by wheight) sold by Eckart GmbH & Co. KG.

Particle Size Distribution (PSD): $D_{10}$ = 3 $\mu$m; $D_{50}$ = 11.5 $\mu$m; $D_{90}$ = 19.0 $\mu$m

This pigment dispersion is called **Pigment C** in the following.

**Crushing and solvent exchange (Pigment D):**

The Metalure W (Pigment C) dispersion was diluted to a 10 % dispersion with isopropanol. Than the dispersion was crushed in a pearl mill (DRAIS PML H/V SuperTex) using stainless steel spheres (diameter: 0.7 - 0.9 mm). An additive was added (DisperByk 106) to prevent agglomeration of the metal pigments. The milling duration was 4 h.

The crushed pigments had a Particle Size Distribution (PSD)* characterized by:

$$D_{10} = 0.6\ \mu m;\ D_{50} = 2.2\ \mu m;\ D_{90} = 4.6\ \mu m;\ D_{100} = 10\ \mu m.$$

The crushed pigment dispersion was further subjected to a solvent exchange process yielding a 30 % dispersion in PG (Propylglycol)

**Charactarization of the pigments:**

**a) average particle thickness**

The samples were prepared for the SEM investigation as described below:

The aluminium effect pigments B and D were in each case present in the form of a paste or dispersion and are each first washed with acetone and then dried.

A resin customarily used in electron microscopy, for example TEMPFIX (Gerhard Neubauer Chemikalien, D-48031 Munster, Germany), is applied to a sample plate and heated to softening on a hotplate. Subsequently, the sample plate is taken from the hotplate and the respective aluminium powder is scattered onto the softened resin. The resin becomes solid again as a result of cooling and the scattered aluminium effect pigments - due to the interplay between adhesion and the force of gravity - can be prepared standing almost vertically and fixed to the sample plate. As a result, the pigments can readily be measured laterally in the electron microscope. In the measurement of the thickness, the azimuthal angle $\alpha$ of the pigment is estimated relative to a plane normal to the surface and allowed for when evaluating the thickness $h_{eff}$ according to the formula:

$$h_{eff} = h_{meas}/\cos \alpha.$$

The cumulative breakthrough curve was plotted from the $h_{eff}$ values with the aid of the relative frequencies of occurrence. At least about 100 particles were counted. From these data the $h_{10}$, $h_{50}$ and $h_{90}$ values from the average thickness distribution could be estimated. As a measure of the mean thickness the $h_{50}$ value was taken.

Table 1: Pigment characteristics of wet milled pigment (pigment B) and of pvd-pigment (pigment D)

| Sample | Size characteristics | | | Average Thickness parameters from SEM counting | | | Span thickness $[(h_{90}-h_{10})/h_{50}]$ | Form-factor $D_{50}/h_{50}$ |
|---|---|---|---|---|---|---|---|---|
| | $D_{10}$ | $D_{50}[\mu m]$ | $D_{90}$ | $h_{10}$ | $h_{50}[nm]$ | $h_{90}$ | | |
| Pigment B | 1.1; | 3.2; | 6.3 | 31 | 50 | 64 | 0,67 | 64 |
| Pigment D | 0.6 | 2.2 | 4.6 | 38 | 47 | 52 | 0,31 | 47 |

a) X-ray diffractometry

The pigments A and C were analysed by X-ray diffraction. A powder diffractometer of Thermoelektron (produced in Ecoblens, Switzerland, type X'tron) was used. The X-ray source was a copper tube and the $K_{\alpha 1,2}$-line was used as excitation source. The instrument had a set up according to a Bragg-Brentano-geometry. The measurements lasted several hours.

The pigments were washed with some acetone and a few drops of the pigment-aceton-dispersion were placed on a rotary disk and were dried at room temperature. During this procedure the pigments oriented in an essentially parallel configuration referring to the underground.

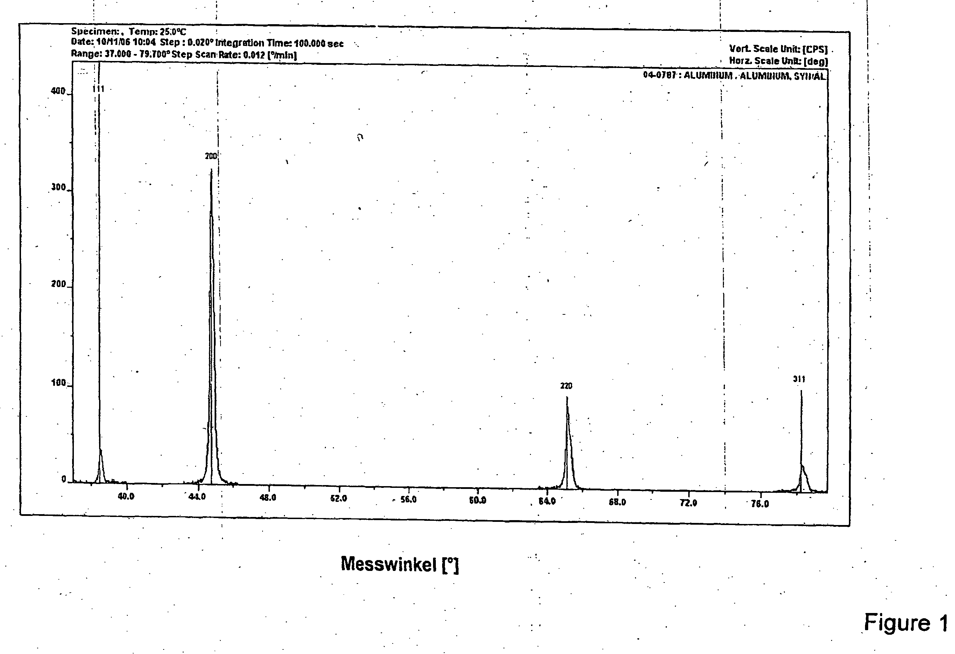

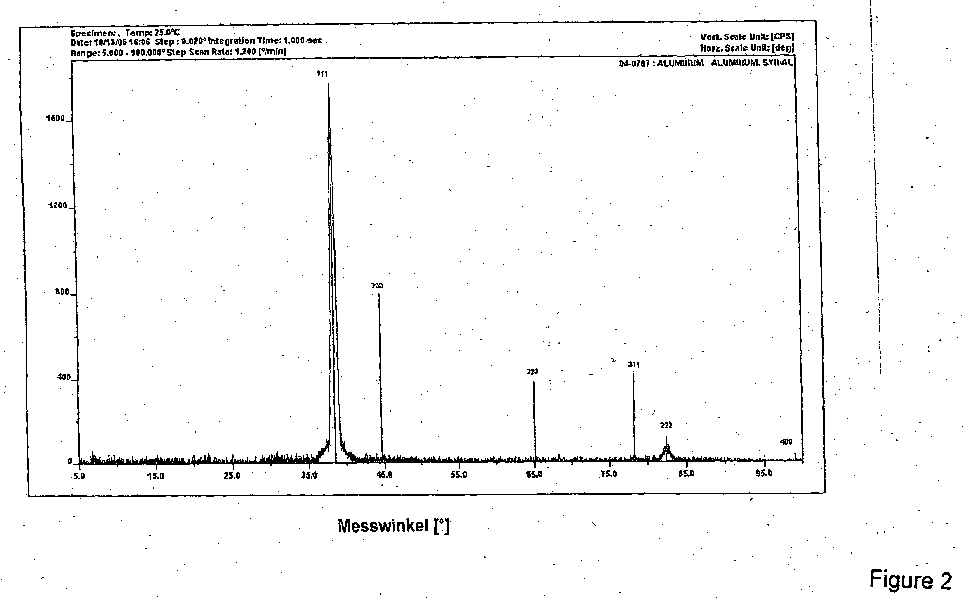

In Fig. 1 and 2 the diffractograms of pigment A and pigment C are presented. The intensity of the detected X-rays are plotted as a function of the measured angles. The position of the expected peaks for aluminium (according to ICDD - International Centre for Diffraction Data) corresponding to diffraction of certain crystallographic planes are marked by lines.

The diffractogram of pigment C (Fig. 2) exhibits peaks of noticeable intensity only for the [111]- and [222]-planes. The peak corresponding to the [222]-plane is the higher order of the [111] plane and has a significant lower intensity. These findings point to a essentially single crystal structure of the pigment, whereas the most densely packed [111]-plane is located parallel to the surface of the platelets.

In Fig. 1 it can be seen that the diffractogram of pigment A exhibits a distinct peak corresponding to reflection of the [200]-plane. Further signals can be seen corresponding to the [220]- and - with noticeably weaker intensity - the [111]- and [311]-planes, respectively. The intensity of all signals is noticeably weaker compared to pigment C (pvd-pigment) although the integration times were longer. Therefore, the crystalline character of pigment A produced by wet grinding is significantly weaker compared to the pvd-pigment.

Such reflexes are characteristic for an aluminium effect pigment in the state of a plastic deformation and therefore they reflect the physical state of an aluminium effect pigment during the grinding process.

**Example 1 according to the invention:**

**Solvent Borne Ink Jet Fluid based on conventionally milled ultrathin Aluminiumpigments (Pigment B)**

Ink Vehicle preparation based on Polyamide resin: Ink Vehicle A

| | |
|---|---|
| Polyamide resin[1] | 15 parts |
| 1-Hexanol | 55 parts |
| N-Methylpyrrolidone (NMP) | 30 parts |

[1] = low molecular weight Polyamide resin SI-18-129 supplied by Arizona chemical Savannah, GA, USA;

The solvent blend is heated to 75°C and the resin portion gradually added. The mixture is agitated with a medium speed mixer until all resin particles have been dissolved.

The finished resin solution is cooled down to room temperature and then filtered through a sub-micron media filter.

Ink jet printing ink preparation:

4 parts Pigment B are added slowly to 96 Parts of Ink Vehicle A and stirred continuously for 15 minutes with a medium speed disperser. The mixture is then subsequently treated in an ultrasonic bath for additional 5 minutes.

The finished ink jet printing ink is then filtered through a 20 $\mu$m mesh filter to remove undesired oversize particles or agglomerates created during the manufacturing process.

Printing:

The finished ink jet printing ink is transferred into a reservoir which allows continuous agitation with a stirrer. The ink jet printing ink is fed into a print head architecture fitted with the necessary peripheral equipment needed to operate the print head. The jetting temperature is adjusted to reach the desired fluid viscosity range of 8-20 cP.

|  |  |
|---|---|
| Print Head: | Spectra Nova PH 256/80 AAA |
| Support System: | Spectra Apollo I Print head support kit |
| Conditions: | Jetting Temperature 70 C |
|  | Jetting frequency 1.5 kHz |

**Comparative Example 2:**

**Solvent Borne Silver Coloured Ink Jet Fluid based on PVD Aluminum Pigment Preparation (Pigment B)**

Ink Vehicle preparation based on Polyamide resin: Ink Vehicle A

Ink vehicle preparation as described in Example 1

ink jet printing ink preparation:

4 parts Pigment D are added to 96 parts of Ink Vehicle A and stirred continuously for 30 minutes with a high speed disperser.

The finished ink jet fluid is then filtered through a 20 $\mu$m mesh filter to remove undesired oversize particles or agglomerates created during the manufacturing process.

The mixture is then subsequently treated in an ultrasonic bath for additional 5 minutes to ensure maximum dispersion.

Printing:

The finished ink jet printing ink is transferred into a reservoir which allows continuous agitation with a stirrer. The ink jet printing ink is fed into a print head architecture with fitted with the necessary peripheral equipment needed to operate the print head. The jetting temperature is adjusted to reach the desired fluid viscosity range of 8-20 cP

|  |  |
|---|---|
| Print Head: | Spectra Nova PH 256/80 AAA |
| Support System: | Spectra Apollo I Print head support kit |
| Conditions: | Jetting Temperature 70 C |
|  | Jetting frequency 1.5 kHz |

**Example 3 according to the invention:**

**UV Silver Coloured Ink Jet Fluid based on wet-milled Aluminum Effect Pigment Preparation (Pigment A)**

Starting Pigment: Aluminium effect pigments obtained by atomisation and milling as described in pigment A. except that a paste in 2-Hydroxy-2-methyl-1-phenyl-1-propanone with a solid content of 50 % by weight was prepared.

Crushing:

30 parts of the aluminium effecct pigment paste described above are dispersed in 30 parts isopropanol using a medium shear disperser.

After sufficient dispersion the mixture is then transferred to high performance media mill and milled until the average particle size of the pigment dispersion reaches a $d_{50}$ of 2.5$\mu$m +/- 0.5. The average particle size distribution

(PSD)* was $d_{10}$ = 1.0 μm; $d_{50}$ = 2.5 μm; $d_{90}$ = 4.73 μm, and $d_{100}$ = 10.3 μm.

* measured with laser granulometer Cilas 1064 (Cilas, France).

The slurry is then removed from the mill and placed into a rotary evaporator in order to remove the isopropanol. Once the isopropanol is removed the solid content is readjusted to 50 % again with additional 2-Hydroxy-2-methyl-1-phenyl-1-propanone (Pigment E).

UV Ink Vehicle preparation: Ink Vehicle C

| | |
|---|---|
| 1,6 Hexandiol diacrylate (HDODA)[3] | 40 parts |
| Phosphine Oxide, Phenylbis(2,4,6-trimethylbenzoyl)- (TPO)[4] | 5 parts |
| Trimethylolpropane polyoxyethylene triacrylate (TMP(EO)$_3$TA)[5] | 40 parts |
| Acrylate Oligomer (CAS: 52408-84-1) | 14 parts |
| Dispersing Additive EFKA 2721[6] | 0.5 parts |

[3] = Miramer M3130, trade mark of MIWON Commercial Co., Ltd.
[4] = Lucirin TPO, trade mark of BASF
[5] = Miramer M200, trade mark of MIWON Commercial Co., Ltd.
[6] = EFKA, trade mark of Ciba Specialty Chemicals

5 parts of TPO are added to 40 parts of HDODA and gently heated under stirring until the TPO has completely dissolved. The temperature should not rise higher than 70°C. The stirring is continued until the mixture cooled down to 50°C, then the other ingredients of the UV vehicle are added.
The finished vehicle is then filtered through a sub-micron media filter.

Ink preparation:

6 parts Pigment E are added to 94 parts of Ink Vehicle C and stirred continuously for 30 minutes with a high speed disperser. The temperature shall not exceed 50°C.
The finished warm ink jet printing ink is then filtered through a 20 μm mesh filter to remove undesired oversize particles or agglomerates created during the manufacturing process.
After cooling the mixture is then subsequently treated in an ultrasonic bath for additional 10 minutes to ensure maximum dispersion.

Printing:

The finished ink jet printing ink is transferred into a reservoir which allows continuous agitation with a stirrer. The ink is fed into a print head architecture with fitted with the necessary peripheral equipment needed to operate the print head. The jetting temperature is adjusted to reach the desired fluid viscosity range of 8-20 cP.

| | |
|---|---|
| Print Head: | Spectra Nova PH 256/80 AAA |
| Support System: | Spectra Apollo I Print head support kit |
| Conditions: | Jetting Temperature 80 C |
| | Jetting frequency 1.0 kHz |

**Comparative Example 4:**

**UV Silver Coloured Ink Jet Fluid based PVD Aluminum Pigment Preparation (Pigment C)**

Starting pigment: Pigment Preparation C as used in Comparative example 2, except that a 20 % dispersion of Metalure W in 2-Hydroxy-2-methyl-1-phenyl-1-propanone as solvent was used.

**Crushing:**

30 parts of the pvd-aluminium pigment dispersion described above are dispersed in 30 parts isopropanol using a medium shear disperser.

After sufficient dispersion the mixture is then transferred to high performance media mill and milled until the average particle size of the pigment dispersion reaches a $d_{50}$ of 2.5μm +/-0.5.

The average particle size distribution (PSD)* is $D_{10}$ = 0.9 μm; $D_{50}$ = 2.5 μm; $D_{90}$ = 4.4 μm, and $D_{100}$ = 9.9 μm.

* measured with laser granulometer Cilas 1064 (Cilas, France).

The slurry is then removed from the mill and placed into a rotary evaporator in order to remove the isopropanol. Once the isopropanol is essentially removed the solid content is readjusted to 30 % again with additional 2-Hydroxy-2-methyl-1-phenyl-1-propanone **(Pigment E).**

UV Ink Vehicle preparation: Ink Vehicle C as described in example 3.

Ink jet printing ink preparation:

10 parts Pigment E are added to 90 parts of Ink Vehicle C and stirred continuously for 30 minutes with a high speed disperser. The temperature shall not exceed 50°C. The finished warm ink jet printing ink is then filtered through a 20 μm mesh filter to remove undesired oversize particles or agglomerates created during the manufacturing process.

After cooling the mixture is then subsequently treated in an ultrasonic bath for additional 10 minutes to ensure maximum dispersion.

Printing:

The finished ink jet printing ink is transferred into a reservoir which allows continuous agitation with a stirrer. The ink jet printing ink is fed into a print head architecture with fitted with the necessary peripheral equipment needed to operate the print head. The jetting temperature is adjusted to reach the desired viscosity range of 8-20 cP.

| | |
|---|---|
| Print Head: | Spectra Nova PH 256/80 AAA |
| Support System: | Spectra Apollo I Print head support kit |
| Conditions: | Jetting Temperature 80 C |
| | Jetting frequency 1.0 kHz |

**Example 5 according to the invention:**

**Solvent Borne Silver Coloured Ink Jet Fluid based on wet-milled Aluminum Pigment Preparation (Pigment A)**

Pigment preparation: Pigment A

Ink Vehicle preparation based on Polyvinyl butyral resin: Ink Vehicle B

| | |
|---|---|
| Polyvinyl butyral resin[7] | 5 parts |
| Isopropanol | 35 parts |
| Ethylene glycol methyl ester | 25 parts |
| Methoxypropanol (PM) | 35 parts |
| [7] = Pioloform BN 18 is a trademark of Wacker Polymer Systems GmbH & Co. KG, Germany | |

The solvent blend is heated to 75°C and the resin portion gradually added. The mixture is agitated with a medium speed mixer until all resin particles have been dissolved.

The finished resin solution is cooled down to room temperature and then filtered through a sub-micron media filter.

Ink jet printing ink preparation:

4 parts Pigment A are added to 96 parts of Ink Vehicle A and stirred continuously for 30 minutes with a high speed disperser.

After sufficient dispersion the mixture is then transferred to high performance media mill and milled until the average particle size of the pigment dispersion reaches 2.8 $\mu$m +/- 0.5. The average particle size distribution (PSD*) was $d_{10}$ = 1.3 $\mu$m; $d_{50}$ = 2.8 $\mu$m $d_{90}$ = 5.6 and $d_{100}$ = 11 $\mu$m.

* measured with laser granulometer Cilas 1064 (Cilas, France).

The finished ink jet printing ink is then filtered through a 20 $\mu$m mesh filter to remove undesired oversize particles or agglomerates created during the manufacturing process.

The mixture is then subsequently treated in an ultrasonic bath for additional 5 minutes to ensure maximum dispersion.

Printing:

The finished ink jet fluid is transferred into a reservoir which allows continuous agitation with a stirrer. The ink is fed into a print head architecture with fitted with the necessary peripheral equipment needed to operate the print head. The jetting temperature is adjusted to reach the desired fluid viscosity range of 8-20 cP.

| | |
|---|---|
| Print Head: | Spectra Nova PH 256/80 AAA |
| Support System: | Spectra Apollo I Print head support kit |
| Conditions: | Jetting Temperature 80 C |
| | Jetting frequency 1.0 kHz |

**Comparative Example 6:**

**Solvent Borne Silver Coloured Ink Jet Fluid based on PVD- Aluminum Pigment Preparation**

Pigment preparation: Pigment C

Ink Vehicle preparation based on Polyvinyl butyral resin: Ink Vehicle B as in example 5.

Ink jet printing ink preparation:

4 parts Pigment C are added to 96 parts of Ink Vehicle B and stirred continuously for 30 minutes with a high speed disperser.

After sufficient dispersion the mixture is then transferred to high performance media mill and milled until the average particle size of the pigment dispersion reaches 2.8 $\mu$m +/- 0.5. The average particle size distribution (PSD*) was $d_{10}$ = 1.0 $\mu$m; $d_{50}$ = 2.8 $\mu$m $d_{90}$ = 5.1 and $d_{100}$ = 10 $\mu$m.

* measured with laser granulometer Cilas 1064 (Cilas, France).

The finished ink jet printing ink is then filtered through a 20 $\mu$m mesh filter to remove undesired oversize particles or agglomerates created during the manufacturing process.

The mixture is then subsequently treated in an ultrasonic bath for additional 5 minutes to ensure maximum dispersion.

Printing:

The finished ink jet printing ink is transferred into a reservoir which allows continuous agitation with a stirrer. The ink is fed into a print head architecture with fitted with the necessary peripheral equipment needed to operate the print head. The jetting temperature is adjusted to reach the desired fluid viscosity range of 8-20 cP.

| | |
|---|---|
| Print Head: | Spectra Nova PH 256/80 AAA |

(continued)

| | |
|---|---|
| Support System: | Spectra Apollo I Print head support kit |
| Conditions: | Jetting Temperature 80 C |
| | Jetting frequency 1.0 kHz |

## Results

The prints obtained when using the ink jet printing ink of the present invention had an optical appearance comparable to prints when using PVD-pigments, containing ink jet printing inks.

## Claims

1. An ink jet printing ink comprising aluminium effect pigments having the following properties:

   a) a $d_{50}$-value of the volume averaged particle size distribution curve of 1 $\mu$m to 5 $\mu$m,
   b) an average thickness $h_{50}$ of 15 to 150 nm determined by counting from SEM images,
   c) an x-ray diffractogram measured on said aluminium effect pigments in essentially plane-parallel alignment showing main peaks which are not [111]-or [222]-reflections.

2. The ink jet printing ink of claim 1, wherein said aluminium effect pigments have an average thickness $h_{50}$ of 20 to 80 nm as determined by counting from their SEM images.

3. The ink jet printing ink of any one of the preceding claims, wherein said aluminium effect pigments have a relative width of the thickness distribution $\Delta h$ of 30 % to 150 % calculated by the following formula (I):

$$\Delta h = 100 \, (h_{90}-h_{10}) \, / \, h_{50} \qquad (I),$$

   wherein $h_{90}$ is the number pigments covering 90 % of the absolute height and $h_{10}$ is the number pigments covering 10 % of the absolute height and $h_{50}$ is the number pigments covering 50 % of the absolute height of said aluminium effect pigments.

4. The ink jet printing ink of claim 3, wherein said aluminium effect pigments have a relative width of the thickness distribution $\Delta h$ of 35 % to 70 %.

5. The ink jet printing ink of any one of claims 3 or 4, wherein said aluminium effect pigments have an average thickness $h_{50}$ of 15 to 80 nm and preferably a $\Delta h$ of 30 to less than 70 % as defined in claim 3.

6. The ink jet printing ink of any one of the preceding claims, wherein said aluminium effect pigments have a $d_{50}$ of the volume averaged particle size distribution curve in a range of about 2 $\mu$m to 5 $\mu$m.

7. The ink jet printing ink of any one of the preceding claims, wherein said aluminium effect pigments have a $d_{99}$ lower than 12 $\mu$m.

8. The ink jet printing ink of any one of the preceding claims, wherein said aluminium effect pigments have a $d_{100}$ of less than 12 $\mu$m.

9. The ink jet printing ink of any one of the preceding claims, wherein said aluminium effect pigments have an aspect ratio $d_{50}/h_{50}$ in a range of 30 to 500.

10. The ink jet printing ink of any one of the preceding claims, wherein said aluminium effect pigments are coated with a layer of corrosion inhibiting material.

11. The ink jet printing ink of claim 10, wherein said corrosion inhibiting material is metal oxide and/or organic polymer.

12. The ink jet printing ink of claim 11, wherein said metal oxide is selected from the group consisting of silicon oxide, aluminium oxide, titanium oxide, iron oxide and mixtures or combinations thereof.

13. The ink jet printing ink of any one of the preceding claims comprising additionally at least one solvent and/or at least one diluent and further at least one additive.

14. The ink jet printing ink of any one of the preceding claims, further comprising at least one binding agent.

15. The ink jet printing ink of claim 14, wherein said binding agent is present in an amount of about 1 to 99 % by weight, based on the total weight of said ink jet printing ink.

16. The ink jet printing ink of any one of the preceding claims, wherein said ink jet printing ink is based on solvents or water or mixtures thereof and comprises a binding agent in an amount of about 1 to 50 % by weight, based on the total weight of said ink jet printing ink.

17. The ink jet printing ink of any one of claims 13 to 16, wherein said ink jet printing ink is a radiation curable ink and said diluent is a reactive diluent.

18. The ink jet printing ink of any one of the claims 13 to 17, wherein said solvent and/or diluent is selected from the group consisting of water, alcohols, esters, ethers, thioethers, glycol ethers, glycol ether acetates, amines, amides, ketons, hydrocarbons and mixtures thereof.

19. The ink jet printing ink of any one of the preceding claims, wherein the said ink jet printing ink is a solvent or water based ink and comprises said solvent or water in an amount of about 10 to 95 % by weight, based on the total weight of said ink jet printing ink.

20. The ink jet printing ink of claim 17, wherein the said ink jet printing ink is a radiation curable ink comprising a solvent in an amount of about 0 to 50 % by weight, based on the total weight of said ink jet printing ink.

21. The ink jet printing ink of any one of the preceding claims, wherein the said at least one additive is selected from the group consisting of dispersing agents, anti-settling agents, lubricants, humectants, surfactants, penetrants or mixtures thereof.

22. The ink jet printing ink of any one of the preceding claims, wherein said aluminium effect pigments are comprised in an amount of about 1 to 30 % by weight, based on the total weight of said ink jet printing ink.

23. The ink jet printing ink of any one of the preceding claims, wherein said ink jet printing ink has a viscosity in a range of about 1 to 100 cps measured with the Brookfield viscometer LV Model DV-II+ using spindle no. 61 at 100 rpm at a temperature of 21°C.

24. A method of printing comprising applying an ink jet printing ink of any of claims 1 to 23 on a surface of a substrate using preferably an ink jet printer.

25. The method of claim 24 wherein said substrate is selected from the group consisting of coated and uncoated paper, coated and uncoated cardboard, plastics, metals, ceramics, glass, textiles and combinations thereof.

26. A method of producing an ink jet printing ink according to any one of claims 1 to 23, comprising gently mixing aluminium effect pigments with components of ink jet printing inks such as solvents, diluents, additives and/or binding agents.

27. An article coated with an ink jet printing ink of any one claims 1 to 23.


**Patentansprüche**

1. Tintenstrahldrucktinte, umfassend Aluminium-Effektpigmente mit den folgenden Eigenschaften:

    a) ein $d_{50}$-Wert des Volumenmittels der Teilchengrößenverteilungskurve von 1 μm bis 5 μm,

b) eine durchschnittliche Dicke $h_{50}$ von 15 bis 150 nm, bestimmt durch Auszählen von REM-Abbildungen,

c) ein Röntgendiffraktogramm, gemessen an den Aluminium-Effektpigmenten in einer im Wesentlichen planparallelen Ausrichtung, das Hauptpeaks aufweist, bei denen es sich nicht um [111]- oder [222]-Reflexionen handelt.

2. Tintenstrahldrucktinte nach Anspruch 1, wobei die Aluminium-Effektpigmente eine durchschnittliche Dicke $h_{50}$ von 20 bis 80 nm, bestimmt durch Auszählen ihrer REM-Abbildungen, aufweisen.

3. Tintenstrahldrucktinte nach einem der vorstehenden Ansprüche, wobei die Aluminium-Effektpigmente eine relative Breite der Dickenverteilung $\Delta h$ von 30 % bis 150 %, berechnet durch die folgende Formel (I), aufweisen:

$$\Delta h = 100(h_{90} - h_{10})/h_{50} \qquad (I),$$

wobei $h_{90}$ die Anzahl der Pigmente, die 90 % der absoluten Höhe abdecken, bedeutet, $h_{10}$ die Anzahl der Pigmente, die 10 % der absoluten Höhe abdecken, bedeutet und $h_{50}$ die Anzahl der Pigmente, die 50 % der absoluten Höhe der Aluminium-Effektpigmente abdecken, bedeutet.

4. Tintenstrahldrucktinte nach Anspruch 3, wobei die Aluminium-Effektpigmente eine relative Breite der Dickenvertei-lung $\Delta h$ von 35 % bis 70 % aufweisen.

5. Tintenstrahldrucktinte nach einem der Ansprüche 3 oder 4, wobei die Aluminium-Effektpigmente eine durchschnitt-liche Dicke $h_{50}$ von 15 bis 80 nm und vorzugsweise einen $\Delta h$-Wert von 30 % bis weniger als 70 % gemäß Definition in Anspruch 3 aufweisen.

6. Tintenstrahldrucktinte nach einem der vorstehenden Ansprüche, wobei die Aluminium-Effektpigmente einen $d_{50}$-Wert des Volumenmittels der Teilchengrößenverteilungskurve im Bereich von 2 $\mu$m bis 5 $\mu$m aufweisen.

7. Tintenstrahldrucktinte nach einem der vorstehenden Ansprüche, wobei die Aluminium-Effektpigmente einen $d_{99}$-Wert von weniger als 12 $\mu$m aufweisen.

8. Tintenstrahldrucktinte nach einem der vorstehenden Ansprüche, wobei die Aluminium-Effektpigmente einen $d_{100}$-Wert von weniger als 12 $\mu$m aufweisen.

9. Tintenstrahldrucktinte nach einem der vorstehenden Ansprüche, wobei die Aluminium-Effektpigmente ein Aspekt-verhältnis $d_{50}/h_{50}$ im Bereich von 30 bis 500 aufweisen.

10. Tintenstrahldrucktinte nach einem der vorstehenden Ansprüche, wobei die Aluminium-Effektpigmente mit einer Schicht aus korrosionshemmendem Material beschichtet sind.

11. Tintenstrahldrucktinte nach Anspruch 10, wobei es sich beim korrosionshemmenden Material um ein Metalloxid und/oder ein organisches Polymeres handelt.

12. Tintenstrahldrucktinte nach Anspruch 11, wobei das Metalloxid aus der Gruppe ausgewählt ist, die besteht aus Siliciumoxid, Aluminiumoxid, Titanoxid, Eisenoxid und Gemische oder Kombinationen davon.

13. Tintenstrahldrucktinte nach einem der vorstehenden Ansprüche, zusätzlich umfassend mindestens ein Lösungsmittel und/oder mindestens ein Verdünnungsmittel und ferner mindestens ein Additiv.

14. Tintenstrahldrucktinte nach einem der vorstehenden Ansprüche, ferner umfassend mindestens ein Bindemittel.

15. Tintenstrahldrucktinte nach Anspruch 14, wobei das Bindemittel in einer Menge von etwa 1 bis 99 Gew.-%, bezogen auf das Gesamtgewicht der Tintenstrahldrucktinte, vorliegt.

16. Tintenstrahldrucktinte nach einem der vorstehenden Ansprüche, wobei die Tintenstrahldrucktinte auf Lösungsmitteln oder Wasser oder Gemischen davon basiert und ein Bindemittel in einer Menge von etwa 1 bis 50 Gew.-%, bezogen auf das Gesamtgewicht der Tintenstrahldrucktinte, umfasst.

**17.** Tintenstrahldrucktinte nach einem der Ansprüche 13 bis 16, wobei es sich bei der Tintenstrahldrucktinte um eine strahlungshärtbare Tinte und beim Verdünnungsmittel um einen Reaktivverdünner handelt.

**18.** Tintenstrahldrucktinte nach einem der Ansprüche 13 bis 17, wobei das Lösungsmittel und/oder Verdünnungsmittel aus der Gruppe ausgewählt ist, die besteht aus Wasser, Alkoholen, Estern, Ethern, Thioethern, Glykolethern, Glykoletheracetaten, Aminen, Amiden, Ketonen, Kohlenwasserstoffen und Gemischen davon.

**19.** Tintenstrahldrucktinte nach einem der vorstehenden Ansprüche, wobei es sich bei der Tintenstrahldrucktinte um eine Tinte auf Lösungsmittel- oder Wasserbasis handelt und diese das Lösungsmittel oder Wasser in einer Menge von etwa 10 bis 95 Gew.-%, bezogen auf das Gesamtgewicht der Tintenstrahldrucktinte, umfasst.

**20.** Tintenstrahldrucktinte nach Anspruch 17, wobei es sich bei der Tintenstrahldrucktinte um eine strahlungshärtbare Tinte handelt, die ein Lösungsmittel in einer Menge von etwa 0 bis 50 Gew.-%, bezogen auf das Gesamtgewicht der Tintenstrahldrucktinte, umfasst.

**21.** Tintenstrahldrucktinte nach einem der vorstehenden Ansprüche, wobei das mindestens eine Additiv aus der Gruppe ausgewählt ist, die besteht aus Dispergiermitteln, Antiabsetzmitteln, Gleitmitteln, Feuchthaltemitteln, oberflächenaktiven Mitteln, Eindringmitteln oder Gemischen davon.

**22.** Tintenstrahldrucktinte nach einem der vorstehenden Ansprüche, wobei die Aluminium-Effektpigmente in einer Menge von etwa 1 bis 30 Gew.-%. bezogen auf das Gesamtgewicht der Tintenstrahldrucktinte, vorliegen.

**23.** Tintenstrahldrucktinte nach einem der vorstehenden Ansprüche, wobei die Tintenstrahldrucktinte eine Viskosität im Bereich von etwa 1 bis 100 cps, gemessen mit dem Brookfield-Viskosimeter LV Modell DV-II+ unter Verwendung einer Spindel Nr. 61 bei 100 U/min und einer Temperatur von 21 °C, aufweist.

**24.** Druckverfahren, umfassend das Aufbringen einer Tintenstrahldrucktinte nach einem der Ansprüche 1 bis 23 auf eine Oberfläche eines Substrats, vorzugsweise unter Verwendung eines Tintenstrahldruckers.

**25.** Verfahren nach Anspruch 24, wobei das Substrat aus der Gruppe ausgewählt wird, die besteht aus beschichtetem und unbeschichtetem Papier, beschichteter und unbeschichteter Pappe, Kunststoffen, Metallen, Keramikmaterialien, Glas, Textilien und Kombinationen davon.

**26.** Verfahren zur Herstellung einer Tintenstrahldrucktinte nach einem der Ansprüche 1 bis 23, umfassend das vorsichtige Mischen von Aluminium-Effektpigmenten mit Komponenten von Tintenstrahldrucktinten, wie Lösungsmitteln, Verdünnungsmitteln, Additiven und/oder Bindemitteln.

**27.** Gegenstand, beschichtet mit einer Tintenstrahldrucktinte nach einem der Ansprüche 1 bis 23.

**Revendications**

**1.** Encre pour impression à jet d'encre comprenant des pigments à effet aluminium ayant les propriétés suivantes :

  a) une valeur $d_{50}$ de la courbe de distribution de granulométrie moyenne en volume de 1 $\mu$m à 5 $\mu$m,
  b) une épaisseur moyenne $h_{50}$ de 15 à 150 nm déterminée par comptage sur des images MEB,
  c) un diffractogramme de rayons X mesuré sur lesdits pigments à effet aluminium dans un alignement essentiellement parallèle au plan présentant des pics principaux qui ne sont pas des réflexions [111] ou [222].

**2.** Encre pour impression à jet d'encre selon la revendication 1, dans laquelle lesdits pigments à effet aluminium ont une épaisseur moyenne $h_{50}$ de 20 à 80 nm telle que déterminée par comptage sur leurs images MEB.

**3.** Encre pour impression à jet d'encre selon l'une quelconque des revendications précédentes, dans laquelle lesdits pigments à effet aluminium ont une largeur relative de la distribution d'épaisseur $\Delta h$ de 30 % à 150 %, calculée par la formule (I) suivante :

$$\Delta H = 100 \, (h_{90} - h_{10}) \, / \, h_{50} \hspace{4cm} (I)$$

dans laquelle $h_{90}$ est le nombre de pigments couvrant 90 % de la hauteur absolue et $h_{10}$ est le nombre de pigments couvrant 10 % de la hauteur absolue et $h_{50}$ est le nombre de pigments couvrant 50 % de la hauteur absolue desdits pigments à effet aluminium.

4. Encre pour impression à jet d'encre selon la revendication 3, dans laquelle lesdits pigments à effet aluminium ont une largeur relative de la distribution d'épaisseur $\Delta h$ de 35 % à 70 %.

5. Encre pour impression à jet d'encre selon l'une quelconque des revendications 3 et 4, dans laquelle lesdits pigments à effet aluminium ont une épaisseur moyenne $h_{50}$ de 15 à 80 nm et de préférence une $\Delta h$ de 30 à moins de 70 %, telle que définie dans la revendication 3.

6. Encre pour impression à jet d'encre selon l'une quelconque des revendications précédentes, dans laquelle lesdits pigments à effet aluminium ont une $d_{50}$ de la courbe de distribution de granulométrie moyenne en volume située dans la plage allant d'environ 2 $\mu$m à 5 $\mu$m.

7. Encre pour impression à jet d'encre selon l'une quelconque des revendications précédentes, dans laquelle lesdits pigments à effet aluminium ont une $d_{99}$ inférieure à 12 $\mu$m.

8. Encre pour impression à jet d'encre selon l'une quelconque des revendications précédentes, dans laquelle lesdits pigments à effet aluminium ont une $d_{100}$ inférieure à 12 $\mu$m.

9. Encre pour impression à jet d'encre selon l'une quelconque des revendications précédentes, dans laquelle lesdits pigments à effet aluminium ont un rapport d'aspect $d_{50}/h_{50}$ situé dans la plage allant de 30 à 500.

10. Encre pour impression à jet d'encre selon l'une quelconque des revendications précédentes, dans laquelle lesdits pigments à effet aluminium sont revêtus d'une couche de matériau inhibiteur de corrosion.

11. Encre pour impression à jet d'encre selon la revendication 10, dans laquelle ledit matériau inhibiteur de corrosion est un oxyde métallique et/ou un polymère organique.

12. Encre pour impression à jet d'encre selon la revendication 11, dans laquelle ledit oxyde métallique est choisi dans le groupe constitué par l'oxyde de silicium, l'oxyde d'aluminium, l'oxyde de titane, l'oxyde de fer et leurs mélanges ou combinaisons.

13. Encre pour impression à jet d'encre selon l'une quelconque des revendications précédentes, comprenant de plus au moins un solvant et/ou au moins un diluant et en outre au moins un additif.

14. Encre pour impression à jet d'encre selon l'une quelconque des revendications précédentes, comprenant en outre au moins un agent liant.

15. Encre pour impression à jet d'encre selon la revendication 14, dans laquelle ledit agent liant est présent en une quantité d'environ 1 à 99 % en poids par rapport au poids total de ladite encre pour impression à jet d'encre.

16. Encre pour impression à jet d'encre selon l'une quelconque des revendications précédentes, laquelle encre pour impression à jet d'encre est à base de solvants ou d'eau ou de mélanges de ceux-ci et comprend un agent liant en une quantité d'environ 1 à 50 % en poids par rapport au poids total de ladite encre pour impression à jet d'encre.

17. Encre pour impression à jet d'encre selon l'une quelconque des revendications 13 à 16, laquelle encre d'impression par jet d'encre est une encre durcissable par un rayonnement et ledit diluant est un diluant réactif.

18. Encre pour impression à jet d'encre selon l'une quelconque des revendications 13 à 17, dans laquelle ledit solvant et/ou diluant est choisi dans le groupe constitué par l'eau, les alcools, les esters, les éthers, les thioéthers, les éthers de glycol, les acétates d'éther de glycol, les amines, les amides, les cétones, les hydrocarbures et leurs mélanges.

**19.** Encre pour impression à jet d'encre selon l'une quelconque des revendications précédentes, laquelle encre pour impression à jet d'encre est une encre à base de solvant ou d'eau et comprend ledit solvant ou eau en une quantité d'environ 10 à 95 % en poids par rapport au poids total de ladite encre pour impression à jet d'encre.

**20.** Encre pour impression à jet d'encre selon la revendication 17, laquelle encre pour impression à jet d'encre est une encre durcissable par un rayonnement et comprenant un solvant en une quantité d'environ 0 à 50 % en poids par rapport au poids total de ladite encre pour impression à jet d'encre.

**21.** Encre pour impression à jet d'encre selon l'une quelconque des revendications précédentes, dans laquelle ledit au moins un additif est choisi dans le groupe constitué par les agents dispersants, les agents anti-sédimentation, les lubrifiants, les humectants, les tensioactifs, les agents de pénétration et leurs mélanges.

**22.** Encre pour impression à jet d'encre selon l'une quelconque des revendications précédentes, dans laquelle lesdits pigments à effet aluminium sont présents en une quantité d'environ 1 à 30 % en poids par rapport au poids total de ladite encre pour impression à jet d'encre.

**23.** Encre pour impression à jet d'encre selon l'une quelconque des revendications précédentes, laquelle encre pour impression à jet d'encre a une viscosité située dans la plage allant d'environ 1 à 100 cps, telle que mesurée au moyen d'un viscosimètre Brookfield LV modèle DV-II+ utilisant une broche N° 61 à 100 t/min et à une température de 21°C.

**24.** Procédé d'impression comprenant l'application d'une encre pour impression à jet d'encre selon l'une quelconque des revendications 1 à 23 sur la surface d'un substrat par utilisation de préférence d'une imprimante à jet d'encre.

**25.** Procédé selon la revendication 24, dans lequel ledit substrat est choisi dans le groupe constitué par le papier couché et non couché, le carton couché et non couché, les matières plastiques, les métaux, les céramiques, le verre, les textiles, et leurs combinaisons.

**26.** Procédé pour produire une encre pour impression à jet d'encre selon l'une quelconque des revendications 1 à 23, comprenant l'opération consistant à mélanger doucement des pigments à effet aluminium avec des composants d'encres pour impression à jet d'encre tels que des solvants, diluants, additifs, et/ou agents liants.

**27.** Article revêtu d'une encre pour impression à jet d'encre selon l'une quelconque des revendications 1 à 23.

EP 2 017 310 B1

Specimen: , Temp: 25.0°C
Date: 10/11/06 10:04 Step : 0.020° Integration Time: 100.000 sec
Range: 37.000 - 79.700° Step Scan Rate: 0.012 [°/min]

Vert. Scale Unit: [CPS]
Horz. Scale Unit: [deg]

04-0787 : ALUMINIUM , ALUMINIUM, SYN/AL

111

200

220

311

400

300

200

100

0

40.0    44.0    48.0    52.0    56.0    60.0    64.0    68.0    72.0    76.0

Messwinkel [°]

Figure 1

Messwinkel [°]

Figure 2

EP 2 017 310 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1205521 A
- JP 11323223 A
- WO 2006101054 A1
- EP 0451785 A1
- WO 2004087816 A2
- EP 1621586 A1
- WO 2004035684 A2
- EP 1613702 A1
- WO 2004087812 A2